# EUROPEAN PATENT SPECIFICATION

(11) **EP 3 300 170 B1**
(45) Date of publication and mention of the grant of the patent: **30.10.2019**
(21) Application number: 15896076.5
(22) Date of filing: 21.08.2015
(51) Int. Cl.: H01Q 9/04, H01Q 5/50, H01Q 1/24

(54) **ANTENNA AND USER EQUIPMENT**
ANTENNE UND BENUTZERAUSRÜSTUNG
ANTENNE ET ÉQUIPEMENT D'UTILISATEUR

(30) Priority: 24.06.2015 CN 201510354981
(43) Date of publication of application: 28.03.2018
(73) Proprietor: ZTE Corporation, Shenzhen, Guangdong 518057 (CN)
(72) Inventor: CHENG, Xiaoqi, Shenzhen Guangdong 518057 (CN)
(74) Representative: CMS Cameron McKenna Nabarro Olswang LLP
(86) International application number: PCT/CN2015/087832
(87) International publication number: WO 2016/206181

(56) References cited:
- CN-A- 103 682 620
- CN-A- 104 143 681
- CN-A- 104 485 512
- CN-A- 104 505 589
- CN-A- 104 505 589
- CN-A- 104 701 619
- US-A1- 2012 157 175
- Masanori Kobayashi ET AL: "Analysis and Synthesis of Tapered Microstrip Transmission Lines", IEEE TRANSACTIONS ON MICROWAVE THEORY AND TECHNIQUES, 1 August 1992 (1992-08-01), XP055473141, DOI: 10.1109/22.149542 Retrieved from the Internet: URL:https://ieeexplore.ieee.org/ielx1/22/3 948/00149542.pdf?tp=&arnumber=149542&isnum ber=3948

## Description

### Technical Field

The present invention relates to the field of communications, and more particularly to an antenna and a user equipment.

### Background

When people pay attention to the performance and quality of mobile phones, requirements on appearance and texture are much stricter. Here, particularly for current fourth generation mobile communication (4G) mobile phones, ultra-thin and metal-frame mobile phones are more and more popular with consumers on the current market. However, in the presence of a metal frame, it is difficult for an electromagnetic wave to be effectively radiated and received, so that the efficiency of a mobile phone antenna will be reduced, and meanwhile, space reserved for designing the mobile phone antenna is further compressed.

Recently, in metal-frame mobile phones, particularly some highly-favored 4G mobile phones at current, launched by many mobile phone manufacturers, metal frames are designed to serve as part of mobile phone antennae. However, it is difficult for these mobile phone antennae based on metal frames to cover all bands of a Long Term Evolution (LTE) system. In addition, it is necessary to introduce an additional tunable switch module, antenna branch element and electrical connecting member on the basis of the metal frame in most cases.

As a result, a large space is occupied. Moreover, the additional tunable switch module, antenna branch element and electrical connecting member are introduced, thereby certainly increasing the design cost and complexity.

Any effective solution to the problem in the related art that an antenna occupies a large space has not been proposed yet at present.

The features of the preamble of the independent claims are known from US2012/0157175 A1. Related technologies are known from CN104505589A and Masanori Kobayashi ET AL: "Analysis and Synthesis of Tapered Microstrip Transmission Lines", IEEE TRANSACTIONS ON MICROWAVE THEORY AND TECHNIQUES, 1 August 1992, XP055473141, DOI: 10.1109/22.149542.

### Summary

To solve the above-mentioned technical problem, the present invention provides an antenna and a user equipment according to appended independent claims. Further improvements and embodiments are provided in the dependent claims.

Also provided is an antenna. The antenna includes a mainboard Printed Circuit Board (PCB) 1, a metal frame 2, an antenna radiation element 3, a first feeding branch element 31, a second feeding branch element 32, a grounding element 4, a feeding point 7, and a clearance area 8.

The mainboard PCB 1 is connected to the metal frame 2 via the grounding element 4.

The antenna radiation element 3 is arranged in the clearance area 8 located at an upper side of the mainboard PCB 1.

The metal frame 2 and the antenna radiation element 3 are arranged on a perimeter of a user equipment to form a frame of the user equipment, and a first gap 21 and a second gap 22 are provided between the metal frame 2 and the antenna radiation element 3.

The feeding point 7 is connected to the antenna radiation element 3 via the first feeding branch element 31 and the second feeding branch element 32, separately.

In an exemplary embodiment, the antenna further includes: a first matching circuit 5 and a second matching circuit 6. Herein, the first matching circuit 5 and the second matching circuit 6 are arranged on the mainboard PCB 1; one end of the first matching circuit 5 is connected to the antenna radiation element 3 via the first feeding branch element 31, and the other end of the first matching circuit 5 is connected to the second matching circuit 6 and the feeding point 7 separately. And one end of the second matching circuit 6 is connected to the antenna radiation element 3 via the second feeding branch element 32, and the other end of the second matching circuit 6 is connected to the first matching circuit 5 and the feeding point 7 separately.

In an exemplary embodiment, the mainboard PCB 1 includes: a dielectric substrate 11 and a metal ground 12 formed by a metal coated area on the back of the dielectric substrate 11.

The metal ground 12 is connected to the metal frame 2 via the grounding element 4.

The first matching circuit 5 and the second matching circuit 6 are arranged on the dielectric substrate 11.

In an exemplary embodiment, both the metal frame 2 and the antenna radiation element 3 are of a symmetric U-shaped structure. The first gap 21 and the second gap 22 have the same gap size, and the first gap 21 and the second gap 22 are symmetrically arranged at two sides of the frame of the user equipment.

In an exemplary embodiment, the first feeding branch element 31 is connected to the antenna radiation element 3 at a central position inside the U-shaped structure of the antenna radiation element 3, and the second feeding branch element 32 is connected to the antenna radiation element 3 at one side of the central position inside the U-shaped structure of the antenna radiation element 3.

The first feeding branch element 31 is arranged to control a low-frequency part by using a microstrip straight-line form.

The second feeding branch element 32 is arranged to control a high-frequency part by using a microstrip tapered-line form.

In an exemplary embodiment, the low-frequency part includes: 698MHz to 960MHz, and the high-frequency part includes: 1710MHz to 2690MHz.

In an exemplary embodiment, the second feeding branch element 32 adopts a trapezoidal microstrip tapered-line form.

In an exemplary embodiment, the first matching circuit 5 is arranged for low-pass filtering, and the second matching circuit 6 is arranged for high-pass filtering.

In an exemplary embodiment, the first matching circuit 5 and the second matching circuit 6 include lumped element capacitors and inductors.

Also provided is a user equipment. The user equipment includes the above-mentioned antenna.

By means of the present invention, the adopted antenna includes a mainboard PCB 1, a metal frame 2, an antenna radiation element 3, a first feeding branch element 31, a second feeding branch element 32, a grounding element 4, a feeding point 7, and a clearance area 8. Herein, the mainboard PCB 1 is connected to the metal frame 2 via the grounding element 4; the antenna radiation element 3 is arranged in the clearance area 8 located at an upper side of the mainboard PCB 1; the metal frame 2 and the antenna radiation element 3 are arranged on a perimeter of a user equipment to form a frame of the user equipment, and a first gap 21 and a second gap 22 are provided between the metal frame 2 and the antenna radiation element 3; and the feeding point 7 is connected to the antenna radiation element 3 via the first feeding branch element 31 and the second feeding branch element 32, separately. Therefore, by using the antenna, the problem that an antenna occupies a large space is solved, thereby reducing volume occupied by the antenna.

### Brief Description of Drawings

The drawings illustrated herein are intended to provide a further understanding for the present invention, and form a part of the present application. Exemplary embodiments and illustrations thereof in the present invention are intended to explain the present invention, and do not form improper limits to the present invention. In the drawings:
FIG. 1 is a structure diagram of an antenna according to an embodiment of the present invention.
FIG. 2 is an alternative structure diagram of an antenna according to an embodiment of the present invention.
FIG. 3 is a simulating curve chart of a return loss of the antenna as shown in FIG. 1.
FIG. 4 is a structure diagram of a first matching circuit of the antenna as shown in FIG. 2.
FIG. 5 is a structure diagram of a second matching circuit of the antenna as shown in FIG. 2.
FIG. 6 is a simulating curve chart of a return loss of the antenna as shown in FIG. 2.

### Detailed Description

The present invention will be illustrated hereinbelow with reference to the drawings and in conjunction with the embodiments in detail. It is important to note that the embodiments in the present application and the characteristics in the embodiments may be combined with each other under the condition of no conflicts.

Other features and advantages of the present invention will be elaborated in the following description, and become obvious partially from the description or are understood by implementing the present invention. The purposes and other advantages of the present invention can be implemented and obtained by means of structures specially pointed out in the description, the claims and the drawings.

To make a person skilled in the art better understand the solution of the present invention, the technical solution in embodiments of the present invention will be clearly and completely described hereinbelow with reference to the drawings in the embodiments of the present invention. It is apparent that the described embodiments are only a part of embodiments of the present invention, not all embodiments. On the basis of the embodiments of the present invention, all other embodiments obtained on the premise of no creative work of a person of ordinary skill in the art shall fall within the scope of protection of the present invention.

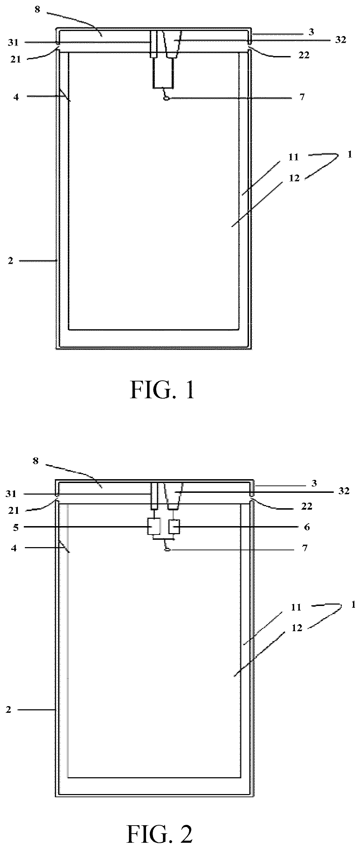

An embodiment of the present invention provides an antenna. FIG. 1 is a structure diagram of an antenna according to an embodiment of the present invention. As shown in FIG. 1, the antenna includes: a mainboard PCB 1, a metal frame 2, an antenna radiation element 3, a first feeding branch element 31, a second feeding branch element 32, a grounding element 4, a feeding point 7, and a clearance area 8.

The mainboard PCB 1 is connected to the metal frame 2 via the grounding element 4.

The antenna radiation element 3 is arranged in the clearance area 8 located at an upper side of the mainboard PCB 1.

The metal frame 2 and the antenna radiation element 3 are arranged on a perimeter of a user equipment to form a frame of the user equipment, and a first gap 21 and a second gap 22 are provided between the metal frame 2 and the antenna radiation element 3.

The feeding point 7 is connected to the antenna radiation element 3 via the first feeding branch element 31 and the second feeding branch element 32, separately.

By means of the above-mentioned antenna, a manner of connecting the two feeding branch elements with the antenna radiation element 3 separately is adopted, so that a sufficient broadband can be obtained without an additional tuning switch. Thus, compared with an antenna in the related art, a problem that an antenna occupies a large space is solved, thereby reducing volume occupied by the antenna.

In an exemplary embodiment, the above-mentioned user equipment includes: equipment integrated with an antenna, such as a mobile phone and a tablet computer and the like.

FIG. 2 is an alternative structure diagram of an antenna according to an embodiment of the present invention. As shown in FIG. 2, as an exemplary embodiment, the antenna further includes a first matching circuit 5 and a second matching circuit 6. Herein, the first matching circuit 5 and the second matching circuit 6 are arranged on the mainboard PCB 1. One end of the first matching circuit 5 is connected to the antenna radiation element 3 via the first feeding branch element 31, and the other end of the first matching circuit 5 is connected to the second matching circuit 6 and the feeding point 7 separately. One end of the second matching circuit 6 is connected to the antenna radiation element 3 via the second feeding branch element 32, and the other end of the second matching circuit 6 is connected to the first matching circuit 5 and the feeding point 7 separately.

In an exemplary embodiment, the mainboard PCB 1 includes: a dielectric substrate 11 and a metal ground 12 formed by a metal coated area on the back of the dielectric substrate 11. Herein, the metal ground 12 is connected to the metal frame 2 via the grounding element 4; and the first matching circuit 5 and the second matching circuit 6 are arranged on the dielectric substrate 11.

In an exemplary embodiment, both the metal frame 2 and the antenna radiation element 3 are of a symmetric U-shaped structure. The first gap 21 and the second gap 22 have the same gap size, and the first gap 21 and the second gap 22 are symmetrically arranged at two sides of the frame of the user equipment.

In an exemplary embodiment, the first feeding branch element 31 is connected to the antenna radiation element 3 at a central position inside the U-shaped structure of the antenna radiation element 3, and the second feeding branch element 32 is connected to the antenna radiation element 3 at one side of the central position inside the U-shaped structure of the antenna radiation element 3. Herein, the first feeding branch element 31 is arranged to control a low-frequency part by using a microstrip straight-line form; and the second feeding branch element 32 is arranged to control a high-frequency part by using a microstrip tapered-line form.

In an exemplary embodiment, the low-frequency part includes: 698MHz to 960MHz, and the high-frequency part includes: 1710MHz to 2690MHz.

In an exemplary embodiment, the second feeding branch element 32 adopts a trapezoidal microstrip tapered-line form.

In an exemplary embodiment, the first matching circuit 5 is arranged for low-pass filtering, and the second matching circuit 6 is arranged for high-pass filtering.

In an exemplary embodiment, the first matching circuit 5 and the second matching circuit 6 include lumped element capacitors and inductors.

An embodiment of the present invention also provides a user equipment. The user equipment adopts the above-mentioned antenna.

In an exemplary embodiment, the above-mentioned user equipment is handheld equipment, such as a smart phone and a tablet computer and the like.

To more clearly describe the embodiments of the present invention, description and illustration will be made hereinbelow in conjunction with an alternative embodiment.

The alternative embodiment of the present invention provides an antenna of a metal-frame mobile phone, to implement a 4G broadband technology by using a simple and effective manner on the basis of a metal frame.

To solve the above-mentioned technical problem, the mobile phone antenna provided in the alternative embodiment of the present invention includes:
a mainboard PCB 1, a metal frame 2, an antenna radiation element 3, two feeding branch elements 31, 32, a grounding element 4, two matching circuits 5, 6, a feeding point 7, and a clearance area 8.

Alternatively, the mainboard PCB 1 includes a dielectric substrate 11 and a metal ground 12 with a back copper-coated area.

Alternatively, the metal frame 2 and the antenna radiation element 3 constitute a frame of a mobile phone; the antenna radiation element 3 is located in the clearance area at an upper side of the PCB 1, the metal frame 2 and the antenna radiation element 3 are attached to the perimeter of the mobile phone PCB, and a pair of gaps with the same size is arranged symmetrically between the metal frame 2 and the antenna radiation element 3; and the grounding element 4 is connected to the metal frame 2 and the PCB metal ground 12.

Alternatively, the antenna radiation element 3 serving as a part of the metal frame of the mobile phone is connected to the two feeding branch elements 31, 32.

Alternatively, the feeding branch element 31 adopts a microstrip straight-line form, and is located in the center of the antenna body 3, and is connected to the matching circuit network 5, and controls a low-frequency part (680-960MHz) of LTE. And the feeding branch element 32 adopts a microstrip tapered-line form, and is located at one side of the antenna body 3, and is connected to the matching circuit network 6, and controls a high-frequency part (1710-2690MHz) of LTE.

Alternatively, both the two matching circuits 5, 6 are located on the dielectric substrate 11, and include lumped element capacitors and inductors. Herein, the matching circuit 5 acts for low-pass filtering, and the matching circuit 6 acts for high-pass filtering, and the two matching circuit networks are led out from the same feeding point 7 on the PCB 1 separately.

The solution in the alternative embodiment of the present invention will be illustrated with FIG. 2 hereinbelow in detail.

In FIG. 2, 1 represents a mainboard PCB of a mobile phone, and a frame of the mobile phone includes a metal frame 2 and an antenna radiation element 3. Herein, a pair of symmetric gaps 21, 22 (located between the metal frame 2 and the antenna radiation element 3) is provided on the frame of the mobile phone, and the widths of the gaps may be 0.2mm. 4 represents a grounding element, and 5 and 6 represent two matching circuits, 31 and 32 represent two feeding branch elements of an antenna, 7 represents a coaxial feeding point, and 8 represents a clearance area of the antenna.

The size of the PCB 1 may be 72mm^{∗}61mm, and the PCB includes a dielectric substrate 11 and a metal ground 12 with a back copper-coated area. Herein, the dielectric substrate 11 maybe made of Rogers RO4003, of which the dielectric constant is 3.55. The antenna radiation element 3 is formed by the metal frame of the mobile phone, and is located in the clearance area at an upper side of the PCB 1 and is connected to the two feeding branch elements 31, 32. The grounding element 4 is connected to the metal frame 2 and the metal ground 12 with the copper-coated area, and the high/low-frequency bandwidth of the antenna can be adjusted by appropriately adjusting a grounding position thereof, and the grounding element can be replaced with a metal elastic sheet.

The two feeding branch elements are located in the clearance area of the antenna at an upper side of the PCB 1. Herein, the feeding branch element 31 adopts a microstrip straight-line form, and is located in the center of the antenna body 3, and is connected to the matching circuit network 5, and controls a low-frequency part (698-960MHz) of LTE. And the feeding branch element 32 adopts a microstrip tapered-line form, and is located at one side of the antenna body 3, and is connected to the matching circuit network 6, and controls a high-frequency part (1710-2690MHz) of LTE. The microstrip tapered line is of a trapezoidal shape, and is mainly intended to better realize in-band impedance matching of high frequency 2.5-2.7GHz, thereby improving the in-band performance.

Both the two matching circuits 5, 6 are located on the dielectric substrate 11, and include lumped element capacitors and inductors. Herein, the matching circuit 5 acts for low-pass filtering, the matching circuit 6 acts for high-pass filtering, and the two matching circuit networks are led out from the same feeding point 7 on the PCB 1 separately.

In the above-mentioned alternative embodiment, a metal frame radiation element and matching networks fed by two branches are just utilized to achieve a smaller space occupation. And due to no introduction of a tuning switch module and an auxiliary antenna branch, the cost is saved, and the design is simplified. Moreover, the LTE broadband can be realized, and the solution can also be used in the design of an antenna of an all-metal mobile phone.

The working effect of double-branch feeding adopted in the alternative embodiment of the present invention will be illustrated hereinbelow.

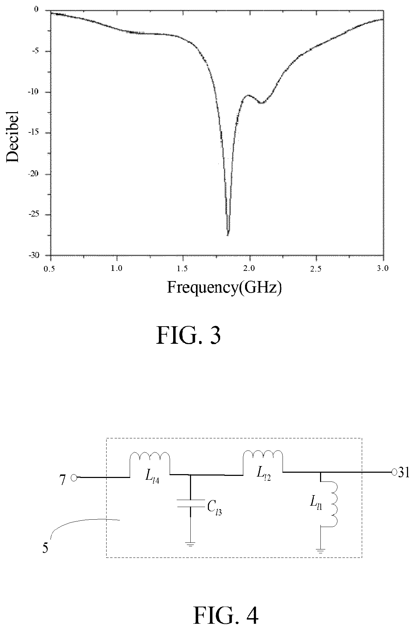

FIG. 3 is a simulating curve chart of a return loss of the antenna as shown in FIG. 1, namely an antenna not added with any matching circuit network. A coaxial feeding point 7 is directly connected to two feeding branch elements 31, 32. From the simulating curve, it can be seen that two resonant modes can be excited by means of only an antenna radiation element 3 of a metal frame, and the resonant modes which can be excited by the antenna radiation element 3 are associated with connecting positions of the two feeding branch elements. In the present alternative embodiment, to obtain the required bandwidth, two microstrip lines are connected with the center and one side of the antenna radiation element 3 separately for feeding, and bandwidth of which the return loss is smaller than -6dB can cover a working band of 1.6-2.4GHz.

From a simulating result, it can be seen that without addition of the antenna matching circuit network, the antenna radiation element 3 can generate two resonances by optimizing the connecting positions of the two feeding branch elements, to generate a working band of 1.6-2.4GHz. Therefore, the antenna can obtain a larger bandwidth by adopting a double-feeding form.

The working effect of an antenna adopting a matching circuit network in the alternative embodiment of the present invention will be illustrated hereinbelow.

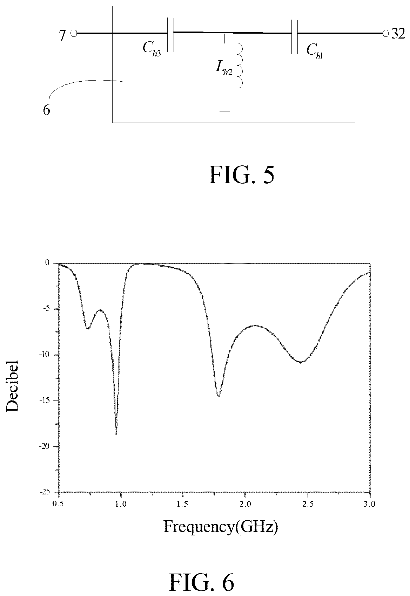

FIG. 4 and FIG. 5 are circuit diagrams of matching networks of the antenna as shown in FIG. 2 respectively.

As shown in FIG. 4, a matching circuit 5 is located on a dielectric substrate 11, and fed by a radio frequency coaxial feeding point 7, and connected to a feeding branch element 31 and composed of parallel capacitors and series and parallel inductors. The matching circuit network mainly adjusts an LTE low-frequency (698-960MHz) part of the antenna, and can change a low-frequency bandwidth and an in-band return loss by optimizing the value of each element. For example, the low-frequency bandwidth can be increased by appropriately increasing parallel inductance Ll1, and the low-frequency in-band return loss is improved by reducing parallel capacitance C13, and the high-frequency is essentially unchanged. Just from the characteristics of the matching circuit 5, it can be seen that it is approximate to low-pass filtering.

As shown in FIG. 5, a matching circuit 6 is also located on the dielectric substrate 11, and fed by the radio frequency coaxial feeding point 7, and connected to a feeding branch element 32 and composed of parallel inductors and series capacitors. The matching circuit network mainly adjusts an LTE high-frequency (1710-2690MHz) part of the antenna, and can improve the high-frequency bandwidth and performance by optimizing the value of each element. For example, if parallel inductance Lh2 is appropriately increased, then resonance deepens at a high frequency of 1.71GHz, and resonance shallows at a frequency of 2.69GHz, and the low-frequency is influenced little. Just from the characteristics of the matching circuit 6, it can be seen that it is approximate to high-pass filtering.

From the above-mentioned simulating results, it can be seen that the two matching circuits 5, 6 are approximate to low-pass filtering and high-pass filtering respectively, and have better band elimination characteristics at corresponding high-frequency and low-frequency bands, so two corresponding feeding paths of the antenna have better isolation.

Alternatively, to meet more band demands, the position of the grounding element 4 can be appropriately adjusted.

FIG. 6 shows a simulating curve chart of a return loss of the antenna as shown in FIG. 2. From FIG. 6, it can be seen that after matching networks are added, the antenna has two resonant bands, and can well cover the whole LTE working band (698-960MHz and 1710-2690MHz), and in-band return losses of two passbands are smaller than -6dB separately. Moreover, the isolation of two passbands is high. Therefore, technical requirements of an antenna of a broadband 4G mobile phone in mobile communications are met.

To give consideration to both appearance and performance, the above-mentioned solution provided in the alternative embodiment of the present invention can be well applied to a design of an antenna of a metal-frame mobile phone. Moreover, the solution provided in the alternative embodiment of the present invention can also add a tuning switch module or introduce antenna branch elements and slots, to obtain a better effect. Moreover, the antenna radiation element 3 described in the above-mentioned embodiments and alternative embodiment of the present invention may be of other shapes in addition to a U shape.

To sum up, according to the solution provided in the above-mentioned embodiments and alternative embodiment of the present invention, an antenna radiation element 3 based on a metal frame is combined with novel matching circuit networks 5, 6, and two branch elements 31, 32 are introduced and fed by a feeding point 7, so that a working band of the low-frequency bandwidth 698-960MHz and the high-frequency bandwidth 1710-2690MHz is implemented, and the band width is broadened, the bandwidth of the antenna and the isolation of the high-frequency and the low-frequency are improved by double-branch feeding and novel matching, and multi-band using requirements of 4G of a radio terminal are met. Moreover, in the above-mentioned technical solution an antenna radiation element and matching networks of a metal mobile phone frame are used to achieve smaller space occupation, and can be used in design of an antenna of an all-metal mobile phone. Moreover, the above-mentioned embodiment of the present invention can realize a 4G broadband without addition of a tuning switch module and introduction of an additional antenna branch, therefore the cost is saved, and the design is simple and feasible, and the embodiment can be widely applied to a 4G mobile phone with an ultrathin metal frame.

### Industrial Applicability

From the above-mentioned description, it can be seen that the present invention adopts a manner of connecting two feeding branch elements with an antenna radiation element 3 separately, so that a sufficient broadband can be obtained without an additional tuning switch. Thus, compared with an antenna in the related art, a problem that an antenna occupies a large space is solved, thereby reducing volume occupied by the antenna.

The above embodiments are only the alternative embodiments of the present invention, and not intended to limit the present invention. As will occur to a person skilled in the art, the present invention may have various modifications and changes. Any modifications, equivalent replacements or improvements made within the scope of the appended claims should fall within the scope of protection of the present invention.

## Claims

1. An antenna, comprising: a mainboard Printed Circuit Board, PCB, (1), a metal frame (2), an antenna radiation element (3), a first feeding branch element (31), a second feeding branch element (32), a grounding element (4), a feeding point (7), and a clearance area (8), wherein
the metal frame (2) and the antenna radiation element (3) are arranged on a perimeter of a user equipment to form a frame of the user equipment, and a first gap (21) and a second gap (22) are provided between the metal frame (2) and the antenna radiation element (3);
where in the antenna radiation element comprises a U-shaped structure the antenna radiation element (3) is arranged in the clearance area (8) located at an upper above one side of the mainboard PCB (1) **characterized in that**, the mainboard PCB (1) is connected to the metal frame (2) via the grounding element (4);
the feeding point (7) is connected to the antenna radiation element (3) via the first feeding branch element (31) and the second feeding branch element (32), separately,
wherein the first feeding branch element (31) is connected to the antenna radiation element (3) at a central position inside the U-shaped structure of the antenna radiation element (3), and the second feeding branch element (32) is connected to the antenna radiation element (3) at one side of the central position inside the U-shaped structure of the antenna radiation element (3), wherein
the first feeding branch element (31) is arranged to control a low-frequency part by using a microstrip straight-line form; and
the second feeding branch element (32) is arranged to control a high-frequency part by using a microstrip tapered-line form.

2. The antenna according to claim 1, further comprising: a first matching circuit (5) and a second matching circuit (6), wherein
the first matching circuit (5) and the second matching circuit (6) are arranged on the mainboard PCB (1); one end of the first matching circuit (5) is connected to the antenna radiation element (3) via the first feeding branch element (31), and the other end of the first matching circuit (5) is connected to the second matching circuit (6) and the feeding point (7) separately; and one end of the second matching circuit (6) is connected to the antenna radiation element (3) via the second feeding branch element (32), and the other end of the second matching circuit (6) is connected to the first matching circuit (5) and the feeding point (7) separately.

3. The antenna according to claim 2, wherein the mainboard PCB (1) comprises: a dielectric substrate (11) and a metal ground (12) formed by a metal coated area on the back of the dielectric substrate (11), wherein
the metal ground (12) is connected to the metal frame (2) via the grounding element (4); and
the first matching circuit (5) and the second matching circuit (6) are arranged on the dielectric substrate (11).

4. The antenna according to claim 2, wherein
both the metal frame (2) and the antenna radiation element (3) are of a symmetric U-shaped structure; and the first gap (21) and the second gap (22) have same gap size, and the first gap (21) and the second gap (22) are symmetrically arranged at two sides of the frame of the user equipment.

5. The antenna according to claim 1, wherein
the low-frequency part comprises: 698MHz to 960MHz, and the high-frequency part comprises: 1710MHz to 2690MHz.

6. The antenna according to claim 1, wherein
the second feeding branch element (32) adopts a trapezoidal microstrip tapered-line form.

7. The antenna according to claim 1, wherein
the first matching circuit (5) is arranged for low-pass filtering; and
the second matching circuit (6) is arranged for high-pass filtering.

8. The antenna according to any one of claims 1 to 7, wherein
the first matching circuit (5) and the second matching circuit (6) include lumped element capacitors and inductors.

9. A user equipment, comprising the antenna according to any one of claims 1 to 8.

## Patentansprüche

1. Antenne, Folgendes umfassend:
eine Hauptplatinenleiterplatte (*Printed Circuit Board* - PCB) (1), einen Metallrahmen (2), ein Antennenstrahlungselement (3), ein erstes Speisungszweigelement (31), ein zweites Speisungszweigelement (32), ein Erdungselement (4), einen Speisungspunkt (7) und einen Luftstreckenbereich (8), wobei der Metallrahmen (2) und das Antennenstrahlungselement (3) auf einem Umfang einer Benutzereinrichtung angeordnet sind, um einen Rahmen der Benutzereinrichtung auszubilden und ein erster Spalt (21) und ein zweiter Spalt (22) zwischen dem Metallrahmen (2) und dem Antennenstrahlungselement (3) bereitgestellt sind;
wobei das Antennenstrahlungselement eine U-förmige Struktur umfasst, das Antennenstrahlungselement (3) in dem Luftstreckenbereich (8) angeordnet ist, der sich oben über einer Seite der Hauptplatinen-PCB (1) befindet, **dadurch gekennzeichnet, dass** die Hauptplatinen-PCB (1) über das Erdungselement (4) mit dem Metallrahmen (2) verbunden ist;
der Speisungspunkt (7) getrennt über das erste Speisungszweigelement (31) und das zweite Speisungszweigelement (32) mit dem Antennenstrahlungselement (3) verbunden ist, wobei das erste Speisungszweigelement (31) an einer zentralen Position innerhalb der U-förmigen Struktur des Antennenstrahlungselements (3) mit dem Antennenstrahlungselement (3) verbunden ist und das zweite Speisungszweigelement (32) an einer Seite der zentralen Position innerhalb der U-förmigen Struktur des Antennenstrahlungselements (3) mit dem Antennenstrahlungselement (3) verbunden ist, wobei das erste Speisungszweigelement (31) angeordnet ist, um einen niederfrequenten Teil unter Verwendung einer Mikrostreifenform mit gerader Linie zu steuern; und
das zweite Speisungszweigelement (32) angeordnet ist, um einen hochfrequenten Teil unter Verwendung einer Mikrostreifenform mit sich verjüngender Linie zu steuern.

2. Antenne nach Anspruch 1, ferner Folgendes umfassend:
eine erste Anpassungsschaltung (5) und eine zweite Anpassungsschaltung (6), wobei die erste Anpassungsschaltung (5) und die zweite Anpassungsschaltung (6) auf der Hauptplatinen-PCB (1) angeordnet sind;
ein Ende der ersten Anpassungsschaltung (5) über das erste Speisungszweigelement (31) mit dem Antennenstrahlungselement (3) verbunden ist und wobei das andere Ende der ersten Anpassungsschaltung (5) getrennt mit der zweiten Anpassungsschaltung (6) und dem ersten Speisungspunkt (7) verbunden ist; und
ein Ende der zweiten Anpassungsschaltung (6) über das zweite Speisungszweigelement (32) mit dem Antennenstrahlungselement (3) verbunden ist und das andere Ende der zweiten Anpassungsschaltung (6) getrennt mit der ersten Anpassungsschaltung (5) und dem Speisungspunkt (7) verbunden ist.

3. Antenne nach Anspruch 2, wobei die Hauptplatinen-PCB (1) Folgendes umfasst:
ein dielektrisches Substrat (11) und eine Metallerde (12), die durch einen metallbeschichteten Bereich auf der Rückseite des dielektrischen Substrats (11) ausgebildet ist, wobei die Metallerde (12) über das Erdungselement mit dem Metallrahmen (2) verbunden ist (4); und
die erste Anpassungsschaltung (5) und die zweite Anpassungsschaltung (6) auf dem dielektrischen Substrat (11) angeordnet sind.

4. Antenne nach Anspruch 2, wobei sowohl der Metallrahmen (2) als auch das Antennenstrahlungselement (3) eine symmetrische U-förmige Struktur haben; und
der erste Spalt (21) und der zweite Spalt (22) dieselbe Spaltgröße aufweisen und der erste Spalt (21) und der zweite Spalt (22) an zwei Seiten des Rahmens der Benutzereinrichtung symmetrisch angeordnet sind.

5. Antenne nach Anspruch 1, wobei der niederfrequente Teil Folgendes umfasst:
698 MHz bis 960 MHz, und der hochfrequente Teil Folgendes umfasst:
1710 MHz bis 2690 MHz.

6. Antenne nach Anspruch 1, wobei das zweite Speisungszweigelement (32) eine trapezförmige Mikrostreifenform mit sich verjüngender Linie annimmt.

7. Antenne nach Anspruch 1, wobei die erste Anpassungsschaltung (5) zum Tiefpassfiltern angeordnet ist; und
die zweite Anpassungsschaltung (6) zum Hochpassfiltern angeordnet ist.

8. Antenne nach einem der Ansprüche 1 bis 7, wobei die erste Anpassungsschaltung (5) und die zweite Anpassungsschaltung (6) Kondensatoren und Induktoren mit konzentrierten Elementen einschließen.

9. Benutzereinrichtung, umfassend die Antenne nach einem der Ansprüche 1 bis 8.

## Revendications

1. Antenne comprenant :
une carte de circuit imprimé, PCB, de carte mère (1), un châssis métallique (2), un élément de rayonnement d'antenne (3), un premier élément de branche d'alimentation (31), un second élément de branche d'alimentation (32), un élément de mise à la masse (4), un point d'alimentation (7) et une zone de dégagement (8),
le châssis métallique (2) et l'élément de rayonnement d'antenne (3) étant agencés sur un périmètre d'un équipement utilisateur pour former un châssis de l'équipement utilisateur, et un premier espace (21) et un second espace (22) sont prévus entre le châssis métallique (2) et l'élément de rayonnement d'antenne (3) ;
dans lequel l'élément de rayonnement d'antenne comprend une structure en forme de U, l'élément de rayonnement d'antenne (3) est agencé dans la zone de dégagement (8) située au-dessus d'un côté de la PCB de carte mère (1),
**caractérisée en ce que**,
la PCB de carte mère (1) est connectée au châssis métallique (2) par l'intermédiaire de l'élément de mise à la masse (4) ;
le point d'alimentation (7) est connecté, séparément, à l'élément de rayonnement d'antenne (3) par l'intermédiaire du premier élément de branche d'alimentation (31) et le second élément de branche d'alimentation (32),
le premier élément de branche d'alimentation (31) étant connecté à l'élément de rayonnement d'antenne (3) à une position centrale à l'intérieur de la structure en forme de U de l'élément de rayonnement d'antenne (3), et le second élément de branche d'alimentation (32) est connecté à l'élément de rayonnement d'antenne (3) sur un côté de la position centrale à l'intérieur de la structure en forme de U de l'élément de rayonnement d'antenne (3),
le premier élément de branche d'alimentation (31) étant agencé pour commander une partie basse fréquence en utilisant une forme de ligne droite microruban ; et
le second élément de branche d'alimentation (32) étant agencé pour commander une partie haute fréquence en utilisant une forme de ligne conique microruban.

2. Antenne selon la revendication 1, comprenant en outre : un premier circuit d'adaptation (5) et un second circuit d'adaptation (6),
le premier circuit d'adaptation (5) et le second circuit d'adaptation (6) étant agencés sur la PCB de carte mère (1) ; une extrémité du premier circuit d'adaptation (5) est connectée à l'élément de rayonnement d'antenne (3) par l'intermédiaire du premier élément de branche d'alimentation (31), et l'autre extrémité du premier circuit d'adaptation (5) est connectée séparément au second circuit d'adaptation (6) et au point d'alimentation (7) ; et une extrémité du second circuit d'adaptation (6) est connectée à l'élément de rayonnement d'antenne (3) par l'intermédiaire du second élément de branche d'alimentation (32), et l'autre extrémité du second circuit d'adaptation (6) est connectée séparément au premier circuit d'adaptation (5) et au point d'alimentation (7).

3. Antenne selon la revendication 2, dans laquelle la PCB de carte mère (1) comprend : un substrat diélectrique (11) et une masse métallique (12) formée par une zone revêtue de métal à l'arrière du substrat diélectrique (11),
la masse métallique (12) étant connectée au châssis métallique (2) par l'intermédiaire de l'élément de mise à la masse (4) ; et
le premier circuit d'adaptation (5) et le second circuit d'adaptation (6) étant agencés sur le substrat diélectrique (11).

4. Antenne selon la revendication 2, dans laquelle
le châssis métallique (2) et l'élément de rayonnement d'antenne (3) ont tous deux une structure symétrique en forme de U ; et le premier espace (21) et le second espace (22) ont la même taille d'espace, et le premier espace (21) et le second espace (22) sont agencés symétriquement sur deux côtés du châssis de l'équipement utilisateur.

5. Antenne selon la revendication 1, dans laquelle
la partie basse fréquence comprend : 698 MHz à 960 MHz, et la partie haute fréquence comprend : 1710 MHz à 2690 MHz.

6. Antenne selon la revendication 1, dans laquelle
le second élément de branche d'alimentation (32) adopte une forme de ligne conique microruban trapézoïdale.

7. Antenne selon la revendication 1, dans laquelle
le premier circuit d'adaptation (5) est agencé pour un filtrage passe-bas ; et
le second circuit d'adaptation (6) est agencé pour le filtrage passe-haut.

8. Antenne selon l'une quelconque des revendications 1 à 7, dans laquelle
le premier circuit d'adaptation (5) et le second circuit d'adaptation (6) comprennent des condensateurs et des bobines d'inductances à éléments localisés.

9. Équipement utilisateur, comprenant l'antenne selon l'une quelconque des revendications 1 à 8.
